(19) Europäisches Patentamt
European Patent Office
Office européen des brevets

(11) **EP 2 821 977 A1**

(12) **EUROPEAN PATENT APPLICATION**
published in accordance with Art. 153(4) EPC

(43) Date of publication:
**07.01.2015 Bulletin 2015/02**

(51) Int Cl.:
*G08G 1/00* (2006.01)        *B60R 21/00* (2006.01)
*B60W 40/09* (2012.01)       *G01C 21/26* (2006.01)
*G08G 1/01* (2006.01)        *G08G 1/09* (2006.01)
*G08G 1/13* (2006.01)

(21) Application number: **13755559.5**

(22) Date of filing: **27.02.2013**

(86) International application number:
**PCT/JP2013/001179**

(87) International publication number:
**WO 2013/128919 (06.09.2013 Gazette 2013/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.02.2012   JP 2012039930**

(71) Applicant: **Yamaha Hatsudoki Kabushiki Kaisha
Iwata-shi, Shizuoka 438-8501 (JP)**

(72) Inventors:
• **YONETA, Keisuke**
  **Iwata-shi**
  **Shizuoka 438-8501 (JP)**
• **DAIMOTO, Hiroshi**
  **Iwata-shi**
  **Shizuoka 438-8501 (JP)**
• **YOSHIKURA, Hajime**
  **Iwata-shi**
  **Shizuoka 438-8501 (JP)**

(74) Representative: **Grünecker, Kinkeldey,
Stockmair & Schwanhäusser
Leopoldstrasse 4
80802 München (DE)**

(54) **HOST COMPUTER, OPERATION-SKILL DETERMINATION SYSTEM, OPERATION-SKILL DETERMINATION METHOD, AND OPERATION-SKILL DETERMINATION PROGRAM**

(57)    Provided is a host computer, a driving skill determining system, a driving skill determining method, and a driving skill determination program that allow enhanced accuracy of a criterion for a driving skill. The host computer includes a determination result database configured to store a plurality of driving skill determination results, and a skill criterion generating unit configured to generate a criterion for a driving skill based on the driving skill determination results stored in the determination result database. The determination result database stores a plurality of driving skill determination results. The skill criterion generating unit generates another new criterion based on the driving skill determination results stored in the determination result database.

Fig.2

EP 2 821 977 A1

## Description

Technical Field

The present invention relates to a host computer, a driving skill determining system, a driving skill determination method, and a driving skill determination program configured to generate criteria for determining a driving skill of a driver.

Background Art

A skill evaluating apparatus for evaluating a driving skill of a driver who drives a two-wheeled or four-wheeled vehicle has been currently used. For a four-wheeled vehicle, a driving skill of the driver can be determined from steering angles. For a two-wheeled vehicle, a variation in roll direction, pitch direction, or caster angle is detected in addition to a variation in yaw direction, and then a driving skill of the driver can be evaluated from the variations.

(1) Technique of Patent Literature 1

Patent Literature 1 discloses a rider characteristic determining device that detects a variation in roll direction, pitch direction, or caster angle in addition to a variation in yaw direction. Then the rider characteristic determining device can determine vehicle satiability, a turning characteristic, and an overall characteristic of a rider based on the detection values of the variations to present the determination results on a monitor.

(2) Technique of Patent Literature 2

Patent Literature 2 discloses a driving support apparatus for a vehicle. The driving support apparatus detects steering angles by a driver, stores a history of the detected steering angles, and determines a steering skill of the driver from the steering history as one of skill levels set in a step manner.
> [Patent Literature 1]
> International Publication WO2011-077638
> [Patent Literature 2]
> Japanese Unexamined Patent Publication No. 2006-232172A

Summary of Invention

Technical Problem

The apparatus mentioned above the Patent Literatures determine the driving skill of the driver based on a skill criterion set in advance therein. Generating the skill criterion set in advance requires collection of many pieces of traveling data. If the collection is insufficient, accurate skill determination is not obtainable. Moreover, since the set skill criterion cannot be updated, enhanced accuracy of the skill criterion is not obtainable.
The present invention has been made regarding the state of the art noted above, and its one object is to provide a host computer, a driving skill determining system, and a driving skill determining method that allow enhanced accuracy of a criterion for a driving skill.

Solution to Problem

To fulfill the above object, the present invention provides the following construction. Specifically, a first embodiment of the present invention discloses a host computer provided with a determination result database configured to store a plurality of driving skill determination results, and a skill criterion generating unit configured to generate a criterion for a driving skill based on the driving skill determination results stored in the determination result database.
With the host computer according to the embodiment of the present invention, the determination result database stores a plurality of driving skill determination results. The skill criterion generating unit generates another new criterion for the driving skill based on a plurality of the driving skill determination results stored in the determination result database. Generating the new criterion for the driving skill causes enhanced accuracy of the criterion for the skill.
Moreover, the determination result database stores traveling information, containing at least one of traveling position information, traveling time information, and vehicle information of various vehicles, in association with the driving skill determination results. The skill criterion generating unit generates the criterion for the driving skill corresponding to the traveling information. Such is preferable.
The determination result database also stores the traveling information of various vehicles corresponding to the driving skill determination results. The traveling information contains at least one of the traveling position information, the traveling time information, and the vehicle information of various vehicles. The skill criterion generating unit generates the criterion for the driving skill corresponding to the traveling information. Generating the criterion for the driving skill corresponding to the traveling information allows generation of the criterion for the driving skill based on the driving skill determination results of the driver actually driving on conditions of the traveling information. Consequently, using the generated criterion for the driving skill allows reduction in error upon determining the driving skill, thereby achieving determination of the driving skill with high accuracy.
Moreover, provided is at least one of a weather information database configured to store weather information and a traffic congestion information database configured to store traffic congestion information. The traveling information contains at least the traveling position information and the traveling time information. The determination result database stores at least one of the weather information and the traffic congestion information in association with the traveling information. The skill criterion generating unit generates the criterion for the driving skill corresponding to at least one of the traveling position information, the traveling time information, the weather information, and the traffic congestion information. Such is preferable.

The host computer includes at least one of the weather information database configured to store the weather information and the traffic congestion information database configured to store the traffic congestion information. The traveling information contains at least the traveling position information and the traveling time information from the traveling position information and the traveling time information, and the vehicle information of various vehicles. The determination result database stores at least one of the weather information and the traffic congestion information in association with the traveling information. Accordingly, at least one of the weather information and the traffic congestion information is also associated with the driving skill determination results. The skill criterion generating unit generates the criterion for the driving skill corresponding to at least one of the traveling information, the weather information, and the traffic congestion information.

As noted above, generating the criterion for the driving skill in this manner causes generation of the criterion for the skill based on the driving skill determination results of the driver actually driving on the conditions of the traveling information, the weather information, and the traffic congestion information. Consequently, using the generated criterion for the driving skill allows reduction in error upon determination of the driving skill, thereby achieving the driving skill determination with high accuracy.

Moreover, the traveling information contains the traveling position information, the traveling time information, and the vehicle information. The skill criterion generating unit generates the criterion for the driving skill corresponding to at least one of the traveling position information, the traveling time information, the vehicle information, the weather information, and the traffic congestion information. Such is preferable. The traveling information contains the traveling position information, the time information, and the vehicle information of various vehicles. The skill criterion generating unit generates the criterion for the driving skill corresponding to at least one of the traveling position information, the traveling time information, the vehicle information, the weather information, and the traffic congestion information.

As noted above, generating the criterion for the driving skill in this manner causes generation of the criterion for the driving skill based on the driving skill determination results of the driver actually driving on the conditions of the traveling position information, the traveling time information, the vehicle information, the weather information, and the traffic congestion information. Consequently, using the generated criterion for the driving skill allows reduction in error upon determination of the driving skill, thereby achieving the driving skill determination with high accuracy.

Moreover, the skill criterion generating unit may generate the criterion for the driving skill corresponding to the specified traveling information. The skill criterion generating unit generates the criterion for the driving skill corresponding to the specified traveling information, whereby the vehicle can require the criterion for the driving skill on a desired condition.

Moreover, a second embodiment of the present invention discloses a driving skill determining system provided with the host computer and a driving skill determining device configured to determine a driving skill of a driver. The driving skill determining device includes a first driving skill determining unit configured to determine the driving skill of the driver from a criterion for the driving skill set in advance, and a second driving skill determining unit configured to determine a relative driving skill of the driver based on the driving skill determination results from the first driving skill determining unit and the criterion for the driving skill generated by the skill criterion generating unit.

The driving skill determining system according to the embodiment of the present invention includes the host computer and the driving skill determining device configured to determine the driving skill of the driver. The driving skill determining device includes two types of the driving skill determining units, i.e., the first driving skill determining unit and the second driving skill determining unit. The first driving skill determining unit determines the driving skill of the driver from the criterion for the driving skill set in advance. The second driving skill determining unit determines the relative driving skill of the driver based on the driving skill determination results from the first driving skill determining unit and the criterion for the driving skill generated by the skill criterion generating unit of the host computer. As noted above, determining the relative driving skill of the driver with a new criterion for the driving skill achieves enhanced reliability for determination of the driving skill.

Moreover, the driving skill determining device includes at least one of a traveling position detector configured to detect traveling positions of the vehicles, a traveling time detector configured to detect traveling times of the vehicles, and a vehicle information storing unit configured to store information on types of the vehicles. The determination result database stores the traveling information, containing at least one of the traveling position information, the traveling time information, and the vehicle information of various vehicles, in association with the driving skill determination results. The skill criterion generating unit generates the criterion for the driving skill corresponding to the traveling information. Such is preferable.

The driving skill determining device includes at least one of the traveling position detector, the traveling time detector, and the vehicle information storing unit. Accordingly, the driving skill determining device allows detection of the traveling information containing at least one of the traveling position, the traveling time vehicle and the vehicle information of the vehicles. The skill criterion generating unit generates the criterion for the driving skill corresponding to the traveling information. Accordingly, the criterion for the driving skill can be generated based on the driving skill determination results of the driver actually driving on the conditions of the traveling information. Consequently, using the generated criterion for the driving skill allows reduction in error upon determination of the driving skill, achieving the determination of the driving skill with high accuracy.

Moreover, the traveling information contains at least the traveling position information and the traveling time information. The driving skill determining device includes at least the traveling position detector and the traveling time detector. The host computer includes at least one of the weather information database configured to store the weather information and the traffic congestion information database configured to store the traffic congestion information. The determination result database stores at least one of the weather information and the traffic congestion information in association with the traveling information. The skill criterion generating unit generates the criterion for the driving skill in association with at least one of the traveling position information, the traveling time information, the weather information, and the traffic congestion information. Such is preferable.

The driving skill determining device includes at least the traveling position detector and the traveling time detector. Accordingly, the traveling information contains at least the traveling position information and the traveling time information. This allows association of the traveling information with the weather information or the traffic congestion information. Consequently, the skill criterion generating unit can generate the criterion for the driving skill associated with at least one of the traveling information, the weather information, and the traffic congestion information. Generating the criterion for the driving skill in this manner causes generation of the criterion for the driving skill based on the driving skill determination results of the driver actually driving on the conditions of the traveling information, the weather information, and the traffic congestion information. As a result, using the generated criterion for the driving skill allows reduction in error upon determination of the driving skill, achieving the determination of the driving skill with high accuracy.

Moreover, the traveling information contains the traveling position information, the traveling time information and the vehicle information. The driving skill determining device includes the traveling position detector, the traveling time detector, and the vehicle information storing unit. The skill criterion generating unit generates the criterion for the driving skill associated with at least one of the traveling position information, the traveling time information, the vehicle information, the weather information, and the traffic congestion information. Such is preferable.

Generating the criterion for the driving skill in this manner causes generation of the skill criterion based on the driving skill determination results of the driver actually driving on the conditions of the traveling position information, the traveling time information, the vehicle information, the weather information, and the traffic congestion information. Consequently, using the generated criterion for the driving skill allows reduction in error upon determination of the driving skill, achieving the determination of the driving skills with high accuracy.

Moreover, the driving skill determining device includes a request information generating unit configured to generate request information with a specified extraction condition for generating the criterion for the driving skill, and a communication unit configured to transmit and receive the information to and from the host computer. The skill criterion generating unit generates the criterion for the driving skill corresponding to the request information. The communication unit transmits the request information to the host computer, and receives the generated criterion for the driving skill. Such is preferable.

The driving skill determining device includes the request information generating unit and the communication unit. This allows the driving skill determining device as a communication terminal to provide request of the extraction condition for generating the criterion for the driving skill to the host computer. Moreover, the driving skill determining device can receive the criterion for the driving skill, through communication, that is generated by the skill criterion generating unit so as to correspond to the request information. This achieves real-time update of the criterion for the driving skill on a required condition.

Moreover, the driving skill determining device preferably includes an own vehicle determination result database configured to store a driving skill determination results from the first driving skill determining unit, and a driving skill history calculating unit configured to calculate the relative driving skill of the driver for a certain period of time based on the driving skill determination results stored in the own vehicle determination result database and the criterion for the driving skill generated by the skill criterion generating unit.

The driving skill determining device includes the own vehicle determination result database and the driving skill history calculating unit. This allows calculation of the relative driving skill of the driver for a certain period of time based on the driving skill determination results from the first driving skill determining unit and the criterion for the driving skill generated by the skill criterion generating unit. This allows redetermination of the previous driving skill determination result with the currently generated criterion for the driving skill. Consequently, enhanced accuracy in determining the driving skill of the driver is obtainable.

Moreover, the driving skill determining device includes an own vehicle determination result database configured to store a driving skill determination results from the first driving skill determining unit in association with the traveling information of an own vehicle, a request information generating unit configured to generate request information with an extraction condition for generating the criterion for the driving skill being specified from the traveling information stored in the own vehicle determination result database, a communication unit configured to transmit and receive the information to and from the host computer, and a driving skill history calculating unit configured to calculate a relative driving skill of the driver for a certain period of time based on the driving skill determination results stored in the own vehicle determination result database and the criterion for the driving skill generated by the skill criterion generating unit. The skill criterion generating unit generates the criterion for the driving skill corresponding to the request information. The communication unit transmits the request information to the host computer, and receives the generated criterion for the driving skill. Such is preferable.

The driving skill determining device includes the own vehicle determination result database, the request information generating unit, the communication unit, and the driving skill history calculating unit. This achieves real-time redetermination of the previous driving skill determination result with the criterion for the driving skill newly generated on the required condition. Consequently, enhanced accuracy in determining the driving skill of the driver is obtainable.

Moreover, the traveling information contains at least the traveling position information and the traveling time information. The driving skill determining device includes at least the traveling position detector and the traveling time detector. The host computer includes at least one of the weather information database configured to store the weather information and the traffic congestion information database configured to store the traffic congestion information. The determination result database stores at least one of the weather information and the traffic congestion information in association with the traveling information. The skill criterion generating unit generates the criterion for the driving skill corresponding to at least one of the traveling position information, the traveling time information, the weather information, and the traffic congestion information. The communication unit receives from the host computer at least one of the weather information and the traffic congestion information. The own vehicle determination result database stores at least one of the weather information and the traffic congestion information via the communication unit in association with the driving skill determination results from the first driving skill determining unit. The request information generating unit generates request information with an extraction condition for generating the criterion for the driving skill being specified from at least one of the position information, the traveling time information, the vehicle information, the weather information, and the traffic congestion information stored in the own vehicle determination result database. Such is preferable.

The driving skill determining device receives at least one of the weather information and the traffic congestion information from the host computer via the communication unit, and the information is associated with the driving skill determination results from the first driving skill determining unit to be stored in the own vehicle determination result database. Consequently, at least one of the weather information and traffic congestion information can be added as one option of the conditions for requiring the criterion for the driving skill. As noted above, the previous driving skill determination result can be redetermined in real time with the newly generated criterion for the driving skill. Consequently, enhanced accuracy in determining the driving skill of the driver is obtainable.

Moreover a third embodiment of the present invention discloses a driving skill determining method. The method includes a first driving skill determining step of determining a driving skill of a driver from a criterion for the driving skill set in advance, a driving skill criterion generating step of generating a criterion for the driving skill based on a plurality of driving skills determined in the first driving skill determining step, and a second driving skill determining step of determining a relative driving skill of the driver based on the criterion for the driving skills and a first driving skill.

In the first driving skill determining step, the driving skill of the driver is determined from the criterion for the driving skill set in advance. In the driving skill criterion generating step, a plurality of first driving skills generated as above is prepared for generating a new criterion for the driving skill. In the second driving skill determining step, the relative driving skill of the driver is determined based on the newly generated criterion for the driving skill and the first driving skill. The relative driving skill is determined in this manner with the new criterion for the driving skill, achieving enhanced reliability for determining the driving skill.

Moreover, a fourth embodiment of the present invention discloses a program in which a driving skill of a driver is determined with a criterion for the driving skill set in advance, the determination results being a first driving skill, and a second driving skill as a relative driving skill of the driver is determined based on a criterion for the driving skill generated based on the first driving skills and the first driving skills. The relative driving skill of the driver is determined with the new criterion for the driving skill generated based on the first driving skills. This achieves enhanced reliability for determining the driving skill.

Advantageous Effects of Invention

The embodiments of the present invention can provide a host computer, a driving skill determining system, a driving skill determining method, and a driving skill determination program that obtain a criterion for the driving skill with enhanced accuracy.

Brief Description of Drawings

Figure 1 illustrates a driving skill determining system according to one embodiment of the present invention.

Figure 2 is a function block diagram illustrating the driving skill determining system according to the embodiment.

Figure 3 illustrates a classified category for a time frame according to the embodiment.

Figure 4 illustrates a classified category for a displacement according to the embodiment.

Figure 5 illustrates a classified category for a weight according to the embodiment.

Figure 6 illustrates a classified category for weather according to the embodiment.

Figure 7 illustrates a database that accumulates determination results according to the embodiment.

Figure 8 and 9 are schematic side views of a vehicle according to the embodiment.

Figure 10 is a flow chart of determining a driving skill according to the embodiment.

Figure 11 is a flow chart of generating a criterion for the driving skill according to the embodiment.

Figure 12 illustrates a category for determining a relative driving skill according to the embodiment.

Figure 13 is a function block diagram of a driving skill determining system according to another embodiment.

Figure 14 is a flow chart of generating a criterion for the driving skill according to the other embodiment.

Embodiment 1

The following describes Embodiment 1 of the present invention with reference to drawings. Here, a two-wheeled motor vehicle and a four-wheeled motor vehicle are each described as an example of a vehicle according to Embodiment 1. In the following description, an element meaning both the two-wheeled motor vehicle and the four-wheeled motor vehicle is simply referred to as a vehicle.

1. Outline Construction of Driving Skill Determining System

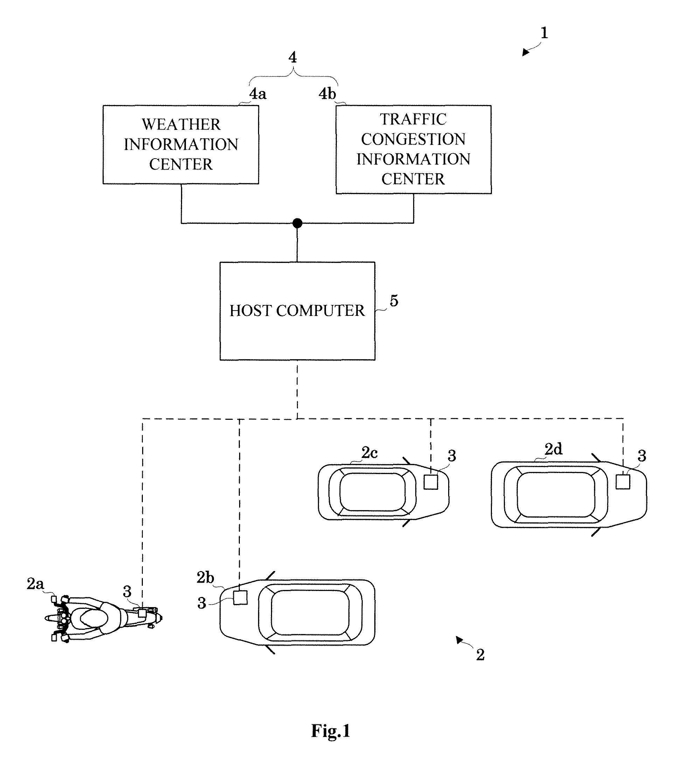

Figure 1 illustrates an aspect of a driving skill determining system according to the embodiment.

A driving skill determining system 1 collects driving skill determination results of drivers of a plurality of vehicles generates a new driving skill criterion based on the determination results. Then, the driving skill determining system 1 determines a relative driving skill of various drivers using the generated driving skill criterion. The driving skill determining system 1 is formed by a driving skill determining device 3 configured to determine the driving skill of each driver of a vehicle 2, an information center 4 configured to provide information on a traveling environment of the vehicle 2, and a host computer 5 configured to generate a driving skill criterion based on the driving skill of the driver determined by the driving skill determining device 3 and the information on the traveling environment from the information center 4. Examples of the vehicle 2 include a two-wheeled motor vehicle 2a and a four-wheeled motor vehicle 2b to 2d.

The driving skill determining device 3 and the host computer 5, and the information center 4 and the host computer 5 are connected through internet lines, respectively, and can communicate with each other. Here, the driving skill determining device 3 provided in each vehicle 2 and the host computer 5 are connected to the internet lines via a communicator.

The information center 4 is an information site for providing the information on traveling environment of the vehicle 2. For instance, a weather information center 4a for providing weather information and a traffic congestion information center 4b for providing traffic congestion information are accessibly connected to the host computer 5. The host computer 5 obtains the weather information, corresponding to latitude/longitude and a time of day, from the weather information center 4a. Examples of the weather center 4a include a web server of the Meteorological Agency. Moreover, the host computer 5 obtains the traffic congestion information, corresponding to latitude/longitude and a time of day, from the traffic congestion information center 4b. Examples of the traffic congestion information center 4b include a web server of the road traffic information center.

2. Driving Skill Determining Device

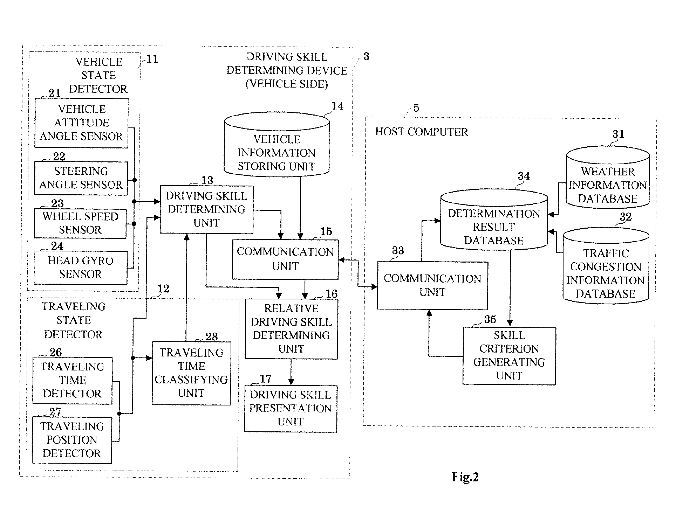

The following describes an outline construction of the driving skill determining device 3 with reference to Figure 2. Figure 2 is a function block diagram of the driving skill determining system according to this embodiment. The driving skill determining device 3 determines a driving skill of the driver based on a first skill criterion set in advance for each vehicle, and transmits the determination result to the host computer 5. In addition, the driving skill determining device 3 receives a second skill criterion as a new driving skill criterion from the host computer 5, and determines a relative driving skill of the driver. Then, the driving skill determining device 3 presents the deterniination result to the driver. Here, the driving skill determining device 3 includes a vehicle state detector 11, a traveling state detector 12, a driving skill determining unit 13, a vehicle information storing unit 14, a communication unit 15, a relative driving skill determining unit 16, and a driving skill presentation unit 17.

The vehicle state detector 11 is composed of sensors each detecting a state of the vehicle. A sensor for detecting a state of the driver besides the state of the vehicle may be included. The vehicle state detector 11 includes a vehicle attitude angle sensor 21, a steering angle sensor 22, a wheel speed sensor 23, and a head gyro sensor 24. The vehicle attitude angle sensor 21 is, for example, a triaxial gyroscope, and detects attitude angles of the vehicle 2. The steering angle sensor 22 detects steering angles of the vehicle 2. The wheel speed sensor 23 detects rotation speeds of wheels of the vehicle 2, and additionally detects vehicle speeds of the vehicle 2 based on the rotation speeds. The head gyro sensor 24 is provided on a helmet of the two-wheeled motor vehicle 2a for detecting variations in head angle of the driver. The detected values of the sensors are outputted to the driving skill determining unit 13.

The traveling state detector 12 includes a traveling time detector 26 configured to detect traveling times of the vehicle 2, a traveling position detector 27 configured to detect traveling positions of the vehicle 2, and a traveling time classifying unit 28 configured to classify the detected traveling times. The traveling state detector 12 detects the traveling position and the traveling time of the vehicle 2 every time the driving skill determining unit 13 determines the driving skill. When none of the traveling time and the traveling position is detected, an "unknown" value is adopted. The traveling time detector 26 also detects a date of the traveling.

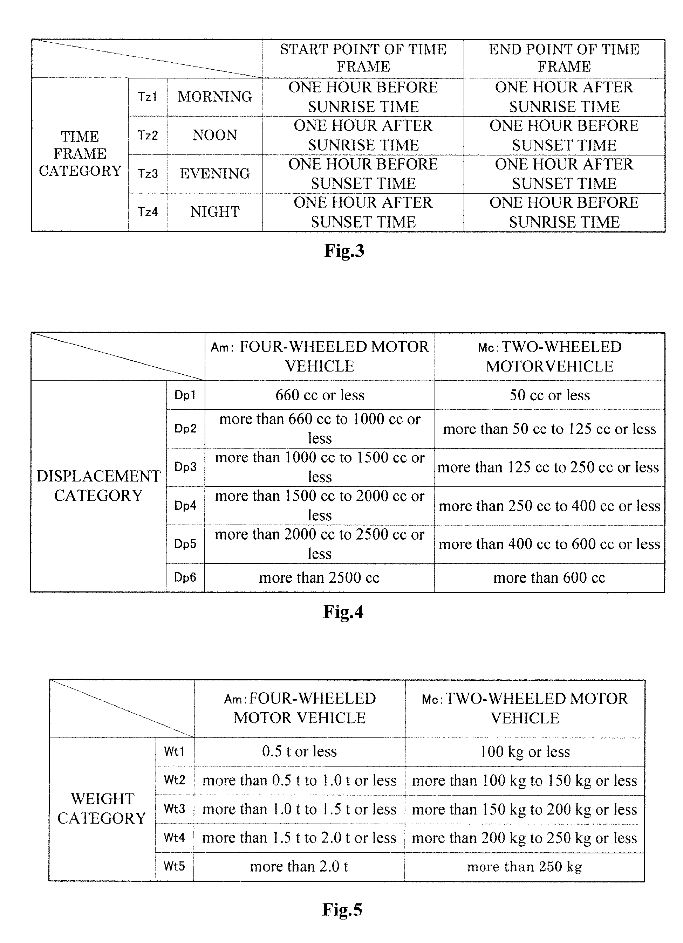

The traveling time classifying unit 28 calculates a sunrise time and a sunset time in the traveling position based on the detected traveling time, the traveling date, and the traveling position. Then, the traveling time classifying unit 28 detects a traveling time detected based on these as time frame information classified into a plurality of categories. Figure 3 illustrates one example of the categorized time frame information. In Figure 3, the time frame is classified into four categories Tz1 to Tz4. The category Tz1 is a morning category. The category includes a traveling time from one hour before to one hour after the sunrise time. The category Tz2 is a noon category. The category includes a traveling time from one hour after the sunrise time to one hour before the sunset time. Moreover, the category Tz3 is an evening category. The category includes in a traveling time from one hour before to one hour after the sunset time. The category Tz4 is a night category. The category includes a traveling time from one hour after the sunset time to one hour before the sunrise time.

Embodiment 1 categorizes the time frame into four categories. Alternatively, the time frame may be classified into more and less number of categories. The detected traveling time, the traveling position, and the categorized time-frame information are outputted to the driving skill determining unit 13.

The driving skill determining unit 13 determines the driving skill of the driver based on the detection results from the sensors. With the two-wheeled motor vehicle 2a, the driving skill is determined, for example, by the method described in Patent Literature 1. With the four-wheeled motor vehicle 2b, the driving skill is determined, for example, by the method described in Patent Literature 2. Besides, the driving skill for the four-wheeled motor vehicle 2b may be determined as under: smoothness of the steering control and the vehicle speed are taken as indexes of the driving skill, and the driving skill become higher as the vehicle speed increases and the steering control is smoother.

The driving skill determining unit 13 determines the driving skill of the driver using the first skill criterion set in advance. For instance, when the driving skill is determined by the method of Patent Literature 1, scores are provided to vehicle stability and a turning characteristic of the driver, and the scores are further weighted and added to obtain an overall characteristic score. Then, the skill of the driver is determined by eleven levels using the first skill criterion with ten reference thresholds. Here, the lowest skill is assumed 0. The skill increases with increase of the number. The middle skill is assumed 5, and the highest skill is assumed 10.

Moreover, the driving skill determining unit 13 determines the driving skills and inputs the traveling time, the traveling position, and the time-frame information of the vehicle 2 from the traveling state detector 12. The received traveling time and the traveling position may be a value at the middle or start of the traveling period of time used for one-time skill determination. As above, any value at any time may be adopted as long as the value represents the traveling period of time during which the skill determination has been made. The communication unit 15 receives the determination result of the driving skill as well as the traveling time, the traveling position and the time-frame information of the vehicle 2. The driving skill determining unit 13 corresponds to the first driving skill determining unit in the present invention.

The vehicle information storing unit 14 stores characteristic information of the vehicle 2. Examples of the characteristic information of the vehicle 2 include information characterizing the vehicle 2, such as a type, a weight, a displacement, a vehicle classification on the Road Traffic Law, a vehicle model, a vehicle number, and a vehicle shape of the vehicle 2. The characteristic information may be stored with values applied to classified categories in advance. Figures 4 and 5 each illustrate an example of classified categories. Figure 4 illustrates six categories Dp1 to Dp6 depending on a displacement of the vehicle 2. Figure 4 also illustrates classifications for a four-wheeled motor vehicle (Am) and a two-wheeled motor vehicle (Mc).

When the vehicle 2 is a four-wheeled motor vehicle 2b, the vehicle has a category Am. The four-wheeled motor vehicle 2b whose displacement is 660 cc or less is included in a displacement category Dp1. The four-wheeled motor vehicle 2b whose displacement is more than 660 cc to 1000 cc or less is included in a category Dp2. The vehicle 2b whose displacement is more than 1000cc to 1500cc or less is included in a category Dp3. The vehicle 2b whose displacement is more than 1500 cc to 2000 cc or less is included in a category Dp4. The vehicle 2b whose displacement is more than 2000 cc to 2500 cc or less is included in a category Dp5. The vehicle 2b whose displacement is more than 2500 cc is included in a category Dp6.

When the vehicle 2 is a two-wheeled motor vehicle 2a, the vehicle model is Mc. The two-wheeled motor vehicle 2a having a displacement of 50 cc or less is included in a displacement category Dp1. The vehicle 2a having a displacement from more than 50 cc to 125 cc or less is included in a category Dp2. The vehicle 2a whose displacement is more than 125 cc to 250 cc or less is included in a category Dp3. The vehicle 2a whose displacement is more than 250 cc to 400 cc or less is included in a category Dp4. The vehicle 2a whose displacement is more than 400 cc to 600 cc or less is included in a category Dp5. The vehicle whose displacement is than 600 cc is included in a category Dp6.

Figure 5 illustrates five classified categories Wt1 to Wt5 depending on weights of the vehicle 2. When the vehicle 2 is a four-wheeled motor vehicle 2b, the four-wheeled motor vehicle 2b whose weight is 0.5 t or less is included in a weight category Wt1. The four-wheeled motor vehicle 2b whose weight is more than 0.5 t to 1.0 t or less is included in a category Wt2. The vehicle 2b whose weight is more than 1.0 t to 1.5 t or less is included in category Wt3. The vehicle whose weight is more than 1.5 t to 2.0 t or less is included in a category Wt4. The vehicle 2b whose weight is more than 2.0 t is included in a category Wt5.

When the vehicle 2 is a two-wheeled motor vehicle 2a, the two-wheeled motor vehicle 2a having a weight of 100 kg or less is included in a weight category Wt1. The two-wheeled motor vehicle 2a whose weight is more than 100 kg to 150 kg or less is included in a category Wt2. The vehicle 2a whose weight is more than 150 kg to 200 kg or less is included in a category Wt3. The vehicle 2a whose weight is more than 200 kg to 250 kg or less is included in a category Wt4. The vehicle 2a whose weight is more than 250 kg is included in a category Wt5. Such characteristic information of the vehicle 2 stored in the vehicle information storing unit 14 is outputted to the communication unit 15.

The communication unit 15 uploads the information on the determination result of the driving skill via radio communication to the host computer 5 in a web server on a network. The information on the determination result of the driving skill to be uploaded contains the traveling time, the traveling position, and the time-frame information, and the vehicle information of the vehicle 2 when the determination results of the driving skill are determined. Here, the traveling time, the traveling position, the time-frame information, and the vehicle information are referred to as traveling information.

The communication unit 15 may adopt any communication configurations by which the communication unit 15 can transmit and receive information to and from the host computer 5. For instance, the information may be transmitted to the host computer 5 using communication lines of a cellular telephone or a smartphone instead of a specific radio communicator. The communication unit 15 downloads a second skill criterion generated by the host computer 5 in response to the uploaded information on the determination results of the driving skill. The received second skill criterion is outputted to the relative driving skill determining unit 16.

The relative driving skill determining unit 16 determines a relative driving skill of the driver based on the determination result of the driving skill received from the driving skill determining unit 13 and the second skill criterion received from the communication unit 15. The determined relative driving skill is outputted to a driving skill presentation unit 17. The relative driving skill determining unit 16 corresponds to the second driving skill determining unit in the present invention.

The driving skill presentation unit 17 presents the received relative driving skill to the driver. The driving skill presentation unit 17 may present the relative driving skill visually, aurally, or tactually. A liquid crystal panel may be adopted for visual presentation, a speaker for aural presentation, and a vibrator for tactual presentation.

3. Host Computer

The host computer 5 generates a new driving skill criterion based on the determination result of the driving skill from each vehicle 2. The host computer 5 includes a weather information database 31, a traffic congestion information database 32, a communication unit 33, a determination result database 34, and a skill criterion generating unit 35.

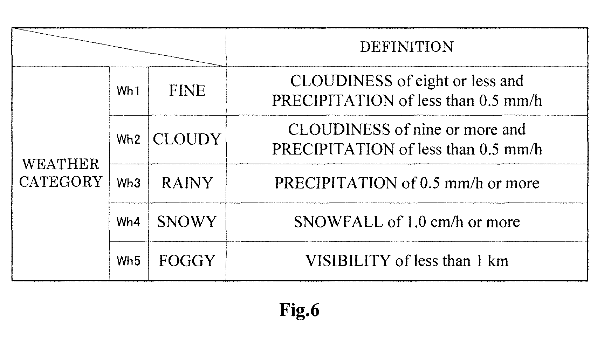

The weather information database 31 stores current and past weather information corresponding to time and locations. The weather information database 31 downloads such weather information from a weather information center 4a, and classifies and stores the information for every category. The categorization may be made using those of the weather information center 4a. Alternatively, the categorization may be made with the weather information database 31 as illustrated in Figure 6.

Figure 6 illustrates five categories Wh1 to Wh5 for a weather category depending on meteorological conditions. A weather category Wh1 contains a "fine" state with a cloudiness of eight or less and a precipitation of less than 0.5 mm/h. A category Wh2 contains a "cloudy" state with a cloudiness of nine or more and a precipitation of less than 0.5 mm/h. A category Wh3 contains a "rainy" state with a precipitation of 0.5 mm/h or more. A category Wh4 contains a "snowy" state with a snowfall of 1.0 cm/h or more. A category Wh5 contains a "foggy" state with a visibility of less than 1 km. Beside this, categorization may be made depending on an air velocity.

The traffic congestion information database 32 stores the current and past traffic congestion information corresponding to time and locations. The traffic congestion information database 32 downloads and stores such traffic congestion information from the traffic congestion information center 4b, and classifies the information for every category. Here, the traffic congestion information may be a traffic congestion forecast and a predicted value of the traffic congestion. The traffic congestion information has already been classified into three categories by the traffic congestion information center 4b. That is, the information is categorized into smoothness, crowdedness, and congestion.

The communication unit 33 transmits and receives information to and from the communication units 15 of the vehicles 2. The communication unit 33 receives the information on the determination results of the driving skills from the vehicles 2, and transmits the skill criterion newly generated by the skill criterion generating unit 35 to the communication units 15 of the vehicles 2.

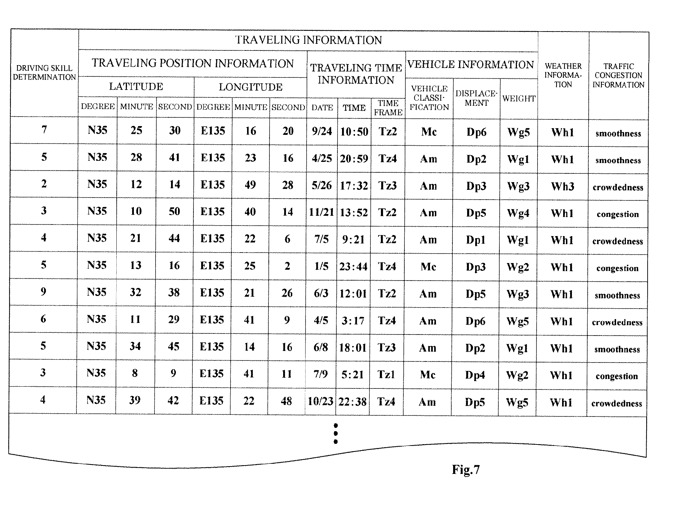

The determination result database 34 stores the information on the determination results of the driving skills and traveling information of the vehicles 2 received via the communication units 15 and 33, the weather information received from the weather information database 31, and the traffic congestion information received from the traffic congestion information database in association with one another. Figure 7 illustrates the associated information stored in the determination result database 34. The determination result of the driving skill, the traveling information, the weather information, and the traffic congestion information may be associated with the traveling time and the traveling position of every vehicle 2.

The skill criterion generating unit 35 generates a criterion for determining the driving skill newly based on the driving skill determination results of the vehicles. The skill criterion generating unit 35 takes the traveling information of the vehicle, the weather information and the traffic congestion information newly stored in the determination result database 34 as an extraction condition. The skill criterion generating unit 35 searches past information under the same extraction condition and generates a new skill criterion using only the determination result of the driving skill obtained under the same extraction condition. Moreover, as for the traveling position information, a linear distance with a certain value or less, e.g., from 10 to 50m, may be assumed to be the same location. The skill criterion is regarded as an average value Xav and a standard deviation σ of the determination results of the driving skills. Alternatively, the skill criterion may be generated with reference to statistics such as a median and a mode.

Moreover, the skill criterion generating unit 35 may generate a skill criterion corresponding to conditions of the traveling position, the traveling time, the vehicle information, the weather information, and the traffic congestion information, and a skill criterion corresponding to any combination of the conditions. The new generated skill criterion is transmitted via the communication units 33 and 15 to the driving skill determining device 3 of the vehicle 2 having uploaded the corresponding determination result of the driving skill.

## 4. Outline Construction of Vehicle

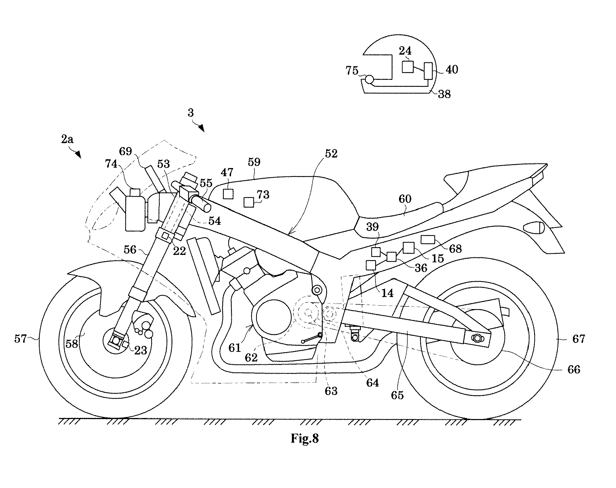

Figure 8 is a side view illustrating an outline construction of the two-wheeled motor vehicle 2a with the driving skill determining device 3 according to Embodiment 1. The two-wheeled motor vehicle 2a includes a main frame 52. The main frame 52 is provided with a head tube 53 on an upper front end thereof. The head tube 53 has a steering shaft 54 inserted thereinto. An upper end of the steering shaft 54 is connected to a handlebar 55.

A lower end of the steering shaft 54 is connected to a pair of extendible and contractible front forks 56. Consequently, turning operation of the handlebar 55 causes the front forks 56 to swing. A front wheel 57 is rotatably attached to lower ends of the front forks 56. Expansion and contraction of the front forks 7 absorbs vibration of the front wheel 57. Brakes 58 are attached to the lower ends of the front forks 56 to provide braking rotation of the front wheel 57 through operation of a brake lever (not shown).

A fuel tank 59 and a seat 60 are supported as arranged fore and aft on an upper portion of the main frame 52. The main frame 52 holds an engine 61 and a transmission 62 below the fuel tank 59. The transmission 62 includes a drive shaft 63 that outputs power generated by the engine 61. The drive shaft 63 is connected to a drive sprocket 64.

A swing arm 65 is swingably supported on a lower rearward portion of the main frame 52. A driven sprocket 66 and a rear wheel 67 are rotatably supported on a rear end of the swing arm 65. An ECU (Electronic Control Unit; electronic control unit) 68 is provided below the seat 60 for controlling operations of various components of the two-wheeled motor vehicle 2a. The two-wheeled motor vehicle 2a further includes a monitor 69 as a liquid crystal display of a touch panel type. The monitor 69 is provided in front of the handlebar 55, and presents various types of information, such as road information.

The two-wheeled motor vehicle 2a includes various sensors of the vehicle state detector 11. A gyroscope 73 as a vehicle attitude angle sensor 21 is disposed on the fuel tank 59. The gyroscope 73 detects angular speeds and angles in triaxial directions of yaw, roll, and pitch of the two-wheeled motor vehicle 2a. That is, the gyroscope 73 detects a yaw rate, a yaw angle, a roll rate, a roll angle, a pitch rate and a pitch angle of the two-wheeled motor vehicle 2a. The steering angle sensor 22 is provided on the upper end of the front forks 56 to detect a steering angle as a rotation angle of the steering shaft 54. The wheel speed sensor 23 detects rotation speeds of the front wheel 57. The wheel speed sensor 23 further calculates vehicle speeds of the vehicle based on the rotation speeds. The detection values of various sensors are outputted to the driving skill determining unit 13.

A GPS 74 is disposed on a forward portion of the vehicle as the traveling time detector 26 and the traveling position detector 27. The GPS 74 detects the traveling position of the vehicle, i.e., the position information on the latitude/longitude, and the traveling time of the vehicle. The detection values of the GPS 74 are transmitted to the driving skill determining unit 13 and the traveling time classifying unit 28. The GPS 74 corresponds to the traveling position detector and the traveling time detector in the present invention.

The communication unit 15 transmits and receives information to and from the host computer 5. A radio communicator may be adopted as the communication unit 15. Alternatively, a mobile terminal such as a cellular telephone or a smartphone may also be adopted. Moreover, the two-wheeled motor vehicle 2a includes a microprocessor 36 and a vehicle information storing unit 14 as a memory storing the vehicle information of an own vehicle. Here, the microprocessor 36 is produced by forming the driving skill determining unit 13, the relative driving skill determining unit 16, and the traveling time classifying unit 28 in one chip.

The helmet 38 includes an eyeball motion detector 75 configured to detect eyeball motions of the driver, a head gyro sensor 24 configured to detect head motions of the driver, and a radio communicator 40. The microprocessor 36 receives detection values of the eyeball motion detector 75 and the head gyro sensor 24 via the radio communicator 40 and a radio communicator 39 provided in the two-wheeled motor vehicle 2a. The driving skill of the driver is determinable from the detection values of the eyeball motions of the driver.

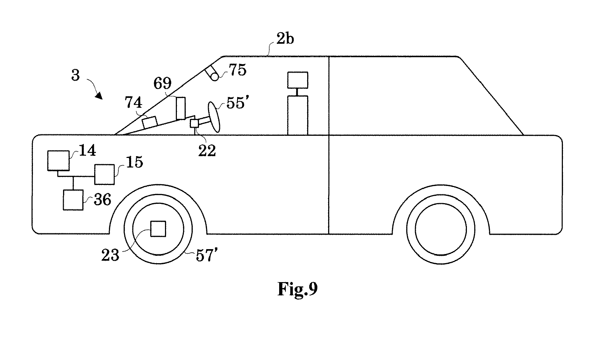

The following describes the case of a four-wheeled motor vehicle 2b with reference to Figure 9. Figure 9 is a side view illustrating an outline construction of the four-wheeled motor vehicle 2b provided with the driving skill determining device 3 according to Embodiment 1. The four-wheeled motor vehicle 2b has front wheels 57' with wheel speed sensors 23. The wheel speed sensor 23 detects rotation speeds of the front wheel 57', and calculates the vehicle speeds of the vehicle based on the rotation speeds. The four-wheeled motor vehicle 2b also includes a steering angle sensor 22a that detects rotation angles of a handlebar 55', and a GPS 74 that detects traveling positions of the vehicle. The steering angle sensor 22, the wheel speed sensor 23, and the GPS 74 are one aspect of the vehicle state detector 11.

Moreover, an eyeball motion detector 75 is provided on a rear-view mirror (not shown) to detect eyeball motions of the driver. A monitor 69 as the driving skill presentation unit 17 is provided on a forward portion of the handlebar 55'. The four-wheeled motor vehicle 2b further includes a communication unit 15 configured to transmit and receive information to and from the host computer 5, and a vehicle information storing unit 14 as a memory that stores vehicle information of an own vehicle. The four-wheeled motor vehicle 2b also includes a microprocessor 36 produced by forming the driving skill determining unit 13, the relative driving skill determining unit 16 and the traveling time classifying unit 28 into one chip.

5. Generation of Skill Criterion

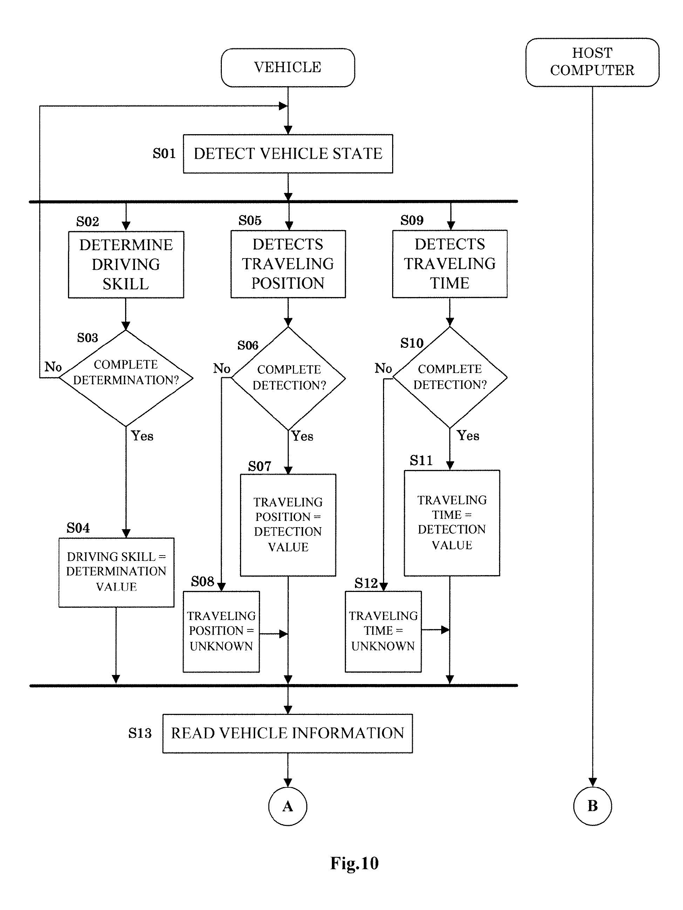

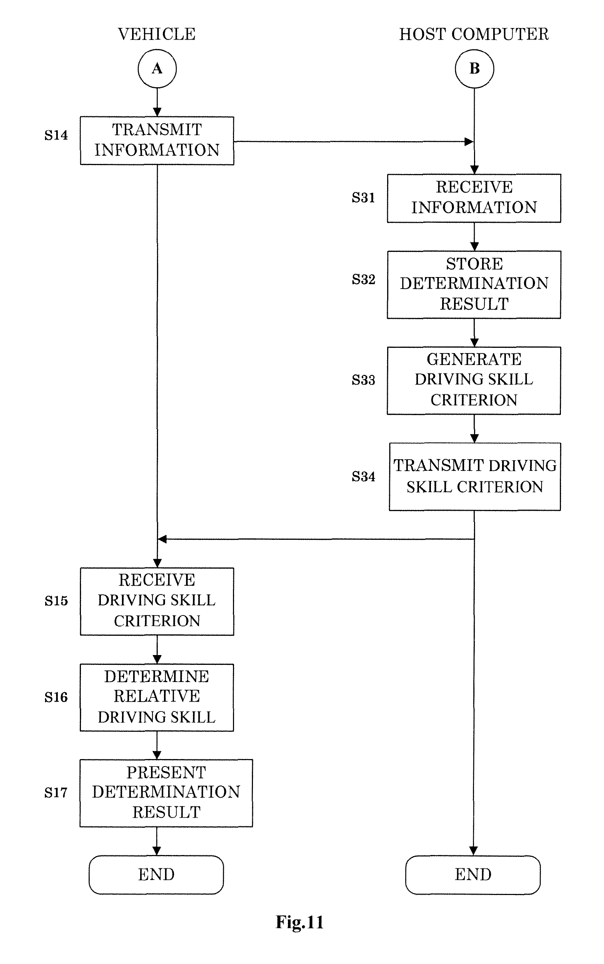

The following describes generation of the skill criterion with reference to Figures 10 and 11. Figures 10 and 11 are flow charts each illustrating procedures of generating the driving skill criterion in Embodiment 1. A procedure from detecting vehicle states of the vehicles until presenting the relative driving skill is divided roughly into two steps of detecting the vehicle states and generating the driving skill criterion. Firstly, the step of detecting the vehicle states is to be described with reference to Figure 10. Only the driving skill determining device 3 of the vehicle 2 operates during the step of detecting the vehicle states.

5.1 Detection of Vehicle States

When the vehicle 2 starts traveling, various sensors of the vehicle state detector 11 detect vehicle states (step S01). Upon start detection of the vehicle states, the driving skill is determined simultaneously with detection of the traveling position and the traveling time. The driving skill determining unit 13 determines the driving skill of the driver from the driving skill criterion set in advance based on the detection values detected by the various sensors of the vehicle state detector 11 (step S02). Here, the determination result is considered as a first driving skill. The step S02 corresponds to the first driving skill determining step in the present invention. When the determination of the driving skill is completed within time set in advance (Yes in the step S03), the driving skill is considered as a determination value (step S04). When the determination of the driving skill is not completed within time set in advance (No in step S03), the procedure returns to the detection of the vehicle states.

Simultaneously with the determination of the driving skill, the traveling position detector 27 detects the traveling position of the vehicle 2 (step S05). When the detection of the traveling position is completed within time set in advance (Yes in step S06), the detection value by the traveling position detector 27 is outputted as a traveling position of the vehicle 2 (step S07). When the detection of the traveling position is not completed within time set in advance (No in step S06), e.g., when the GPS 74 is under a bad reception state, the traveling position of the vehicle 2 is outputted as unknown (step S08).

Simultaneously with the determination of the driving skill, the traveling time detector 26 detects a traveling time of the vehicle 2 (step S09). When the detection of the traveling time is completed within time set in advance (Yes in step S10), the detection value by the traveling time detector 26 is outputted as a traveling time of the vehicle 2 (step S11). When the detection of the traveling time is not completed within time set in advance, e.g., when the GPS 74 is under a bad reception state, the traveling time of the vehicle 2 is outputted as unknown (step S12).

The communication unit 15 receives the driving skill determination result, the traveling position, and the traveling time from the driving skill determining unit 13, and reads the vehicle information from the vehicle information storing unit 14 (step S13), thereby compiling these into one piece of information. The steps of detecting the vehicle states are now completed (A, and B).

5.2 Generation of Driving Skill Criterion

The following describes a procedure of generating the driving skill criterion. The communication unit 15 of the driving skill determining device 3 transmits the driving skill determination result and the traveling information to the host computer 5 (step S14). The host computer 5 receives the driving skill determination result and traveling information of the vehicle 2 from the communication unit 33 (step S31). The determination result database 34 stores the received driving skill determination result and traveling information in association with the weather information and traffic congestion information stored in the weather information database 31 and the traffic congestion information database 32, respectively (step S32). The skill criterion generating unit 35 takes the information newly stored in the determination result database 34 as an extraction condition. The information corresponds to the driving skill determination result and the traveling information transmitted from the vehicle 2 as well as the weather information and the traffic congestion information associated therewith. Moreover, a new driving skill criterion is generated using the extraction condition based on the driving skill determination result, the traveling information, the weather information and the traffic congestion information of every vehicle under the same condition stored in the determination result database 34 (step S33). The step S33 corresponds to the driving skill criterion generating step in the present invention.

The communication unit 33 transmits the newly generated driving skill criterion to the driving skill determining device 3 of the vehicle 2 having transmitted the driving skill determination result and the traveling information (step S34). The communication unit 15 of the driving skill determining device 3 receives the new driving skill criterion from the host computer 5 (step S15). In Embodiment 1, an average value Xav and standard deviation σ of the driving skill determination results are received as the new driving skill criterion. The relative driving skill determining unit 16 determines a relative driving skill using the first driving skill from the driving skill determining unit 13 and the Xav and σ (step S16). For instance, the driving skill determination results are standardized with the following equation:

$$Y = (X - Xav)/\sigma \ldots \text{Equation (1)}$$

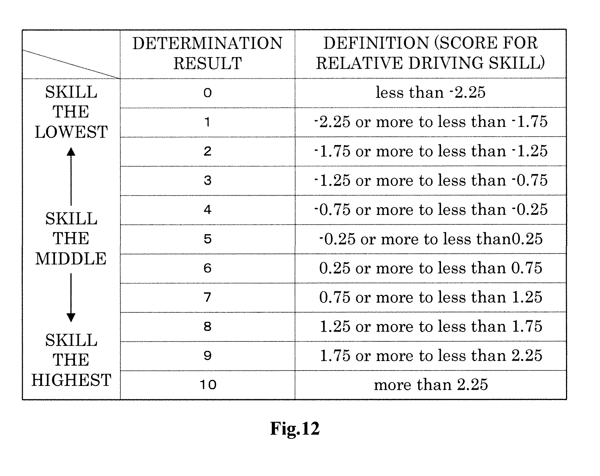

In the above equation, Y is the score of the relative driving skill with which the relative driving skill of the driver is evaluated in a stepless manner. In addition, X is the determination result by the driving skill determining unit 13. The relative driving skill is classified in a step manner using the obtained scores of the relative driving skill and the classification table of Figure 12. In Figure 12, the relative driving skill is classified into 11 scales.

In the classification table of Figure 12, when the score Y of the relative driving skill is less than -2.25, the relative driving skill has the value of 0 and is regarded as "the lowest". The value of the relative driving skill increases as the score Y of the driving skill increases. When the score Y of the relative driving skill is from -0.25 or more to less than 0.25, the relative driving skill has the value of 5, and the rank thereof is regarded as "middle". When the score Y of the relative driving skill is 2.25 or more, the relative driving skill has the value of 10, and the rank thereof is regarded as "the highest". The step S16 corresponds to the second driving skill determining step in the present invention. The monitor 69 presents the determination result of the relative driving skill to the driver (step S17). Accordingly, the driver can confirm the determination result of the relative driving skill personally.

As noted above, the driving skill determining system 1 of Embodiment 1 allows determination of a relative level of the driving skills of a group of the drivers actually driving from past to current. In addition, the number of population increases as time elapses, achieving accurate setting of the criterion for determining the driving skill. Consequently, enhanced reliability for determining the driving skill can be established. As a result, the driver of the vehicle 2 can recognize the relative level of the personal driving skill accurately.

Besides the body of the vehicle 2, a determination result database 34 is provided. The determination result database 34 stores past and current driving skill determination results, and, the traveling positions, the dates, the traveling times, the vehicle information, the weather information, and the traffic congestion information upon the determination of the drivers of all the vehicles 2 each provided with the same type of the driving skill determining device 3. Further, a skill criterion generating unit 35 is provided that generates a driving skill criterion based on the database in response to traveling conditions, and communicates with the vehicle 2. Consequently, setting and updating the driving skill criterion is always obtainable corresponding to the traveling conditions.

Providing the determination result database 34 and the skill criterion generating unit 35 on the host computer 5 achieves a simple configuration of the system of the vehicle 2 and detection of various traveling environments of the vehicle 2. Detecting the traveling environment allows determination of a relative level of the driver's driving skills for every traveling environment. Accordingly, the driving skill can be determined with enhanced accuracy. This achieves a driving skill determining device with low costs and high accuracy.

Moreover, the relative level of the driving skills for the group of drivers actually driving from past to current is determinable for every traveling position. Since a surrounding condition of the vehicle differs depending on its traveling position, traveling intension and a target of the driver differs accordingly. This may result in errors upon determining the driving skill. Here, the driving skill is determined with the criterion for determining the driving skill being set for every location. Consequently, reduction in error upon determination of the driving skill is obtainable, achieving the determination of the driving skill with high accuracy.

Moreover, the relative level of the driving skills for the group of drivers actually driving from past to current is determinable for every traveling time. Surrounding visibility differs depending on the traveling time. For instance, visibility is low at night and is high at noon. The visibility causes various traveling intension and targets of the driver. This may result in errors upon determining the driving skill. Here, the driving skill is determined with the criterion for determining the driving skill being set for every traveling time. Consequently, reduction in error upon determination of the driving skill is obtainable, achieving the determination of the driving skill with high accuracy.

Moreover, the relative level of the driving skills for the group of drivers actually driving from past to current is determinable for every type of the vehicle. For instance, a minivan differs from a sports car in its motion characteristic of the vehicle. Moreover, an ordinary vehicle extremely differs from a truck in its motion characteristic. This may result in errors upon determining the driving skill. Here, the driving skill is determined with the criterion for determining the driving skill being set for every type of the vehicle. Consequently, reduction in error upon determination of the driving skill is obtainable, achieving the determination of the driving skill with high accuracy.

Moreover, the relative level of the driving skills for the group of drivers actually driving from past to current is determinable for the weather. The weather affects the traveling of the vehicle. For instance, when it is rainy, a road surface is wet and thus is more likely to be slipped. When it is windy, the vehicle is likely to be unsteady. The weather may affect a driving act of the driver. The weather causes various traveling intension and targets of the driver. This may result in errors upon determining the driving skills. Here, the driving skill is determined with the criterion for determining the driving skill being set for the weather. Consequently, reduction in error upon determination of the driving skill is obtainable, achieving the determination of the driving skill with high accuracy.

Moreover, the relative level of the driving skills for the group of drivers actually driving from past to current is determinable for every traffic congestion condition. For instance, in the event of the traffic congestion, the surrounding is crowded and speedup of the vehicle is impossible. Such a traffic congestion condition causes various traveling intension and targets of the driver. This may result in errors upon determining the driving skill. Here, the driving skill is determined with the criterion for determining the driving skill being set for every traffic congestion condition. Consequently, reduction in error upon determination of the driving skill is obtainable, achieving the determination of the driving skill with high accuracy.

Moreover, the driving skill is determined with the driving skill criterion being set for any combination of the traveling position, the traveling time, the vehicle information, the weather information, and the traffic congestion information. This achieves a less error for determining the driving skill than the case when the criterion is set individually. Consequently, the driving skill is determinable with high accuracy.

Moreover, the driver of the vehicle 2 in the group of the drivers actually driving from past to current can recognize the relative level of the driving skills personally with high accuracy. Consequently, the driver has stimulated ambition to challenge to a higher skill level. This enhances a motivation for driving the vehicle 2.

Embodiment 2

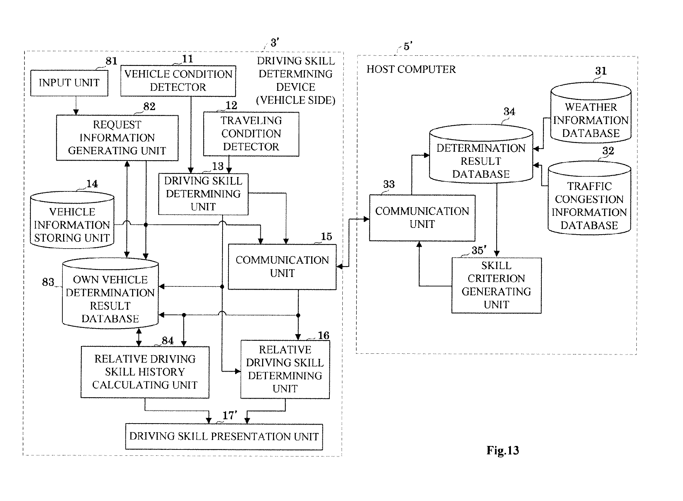

The following describes a driving skill determining system according to Embodiment 2 with reference to Figure 13.

In Embodiment 1, the extraction condition for generating the driving skill criterion cannot be required as a request. In contrast to this, Embodiment 2 discloses a driving skill determining system configured to generate a skill criterion in response to the extraction condition that the vehicle 2 requires. Figure 13 is a function block diagram of the driving skill determining system according to Embodiment 2. In Figure 13, since the elements having the same numerals as those in Embodiment 1 are same construction, description thereof is to be omitted.

Embodiment 2 has the feature that the relative driving skill of the past driving skill can be calculated retroactively based on the driving skill determined previously using the updated driving skill criterion. In addition, the driver can arbitrarily specify a period of time for calculating the relative driving skill retroactively.

A driving skill determining device 3' according to Embodiment 2 includes the driving skill determining device 3 of Embodiment 1, and further includes an input unit 81 configured to specify a period of time for calculating a driving skill by a driver retroactively, a request information generating unit 82, an own vehicle determination result database 83, and a relative driving skill history calculating unit 84. The configurations of a driving state sharing device and the vehicle, other than those described hereinunder, are similar to those in Embodiment 1.

The input unit 81 sets and inputs a period of time during which the past relative driving skill of the driver is calculated retroactively. Examples of the input unit 81 include a touch panel-type liquid crystal monitor. Here, a monitor 69 functions as the input unit 81. The inputted period of time is outputted to the request information generating unit 82.

The request information generating unit 82 generates request information requested to the host computer for the period of time inputted to the input unit 81. The determination results of the vehicles and the conditions which the determination is performed are stored in the determination result database 34 of the host computer 5', the results and the conditions being associated with each other. Here, the conditions which the determination is performed correspond to the traveling position information, the traveling time information, the vehicle information, the weather information, and the traffic congestion information.

The own vehicle determination result database 83 stores the determination result of the driving skill determined by the driving skill determining unit 13 so as to be associated with the corresponding traveling information. The own vehicle determination result database 83 also fetches the weather information and the traffic congestion information from the host computer 5' via the communication units 15, 33, and stores the information such that the information is associated with the determination result of the driving skill and traveling information. The own vehicle determination result database 83 stores the same items to be stored as those of the determination result database 34, but differs from the determination result database 34 in that only information on the own vehicle 2 is stored.

The request information generating unit 82 compares the period of time inputted to the input unit 81 with the associated traveling time information stored in the own vehicle determination result database 83. Then, the request information generating unit 82 transmits, to the host computer 5' via the communication units 15, 33, the traveling position information, the traveling time information, the vehicle information, the weather information, and the traffic congestion information as the request information while the information is associated with one another. Here, the information is the stored information in the own vehicle determination result database 83 that is contained in the period of time inputted to the input unit 81.

The relative driving skill history calculating unit 84 calculates the past relative driving skill based on the control skill determination result X, stored in the own vehicle determination result database 83 and corresponding to the request information, and skill criteria Xav and σ calculated based on the request information using the same approach as that upon the relative skill determination to generate a relative driving skill history. The relative driving skill history is stored in the own vehicle determination result database 83, and is presented to the driver on a driving skill presentation unit 17'.

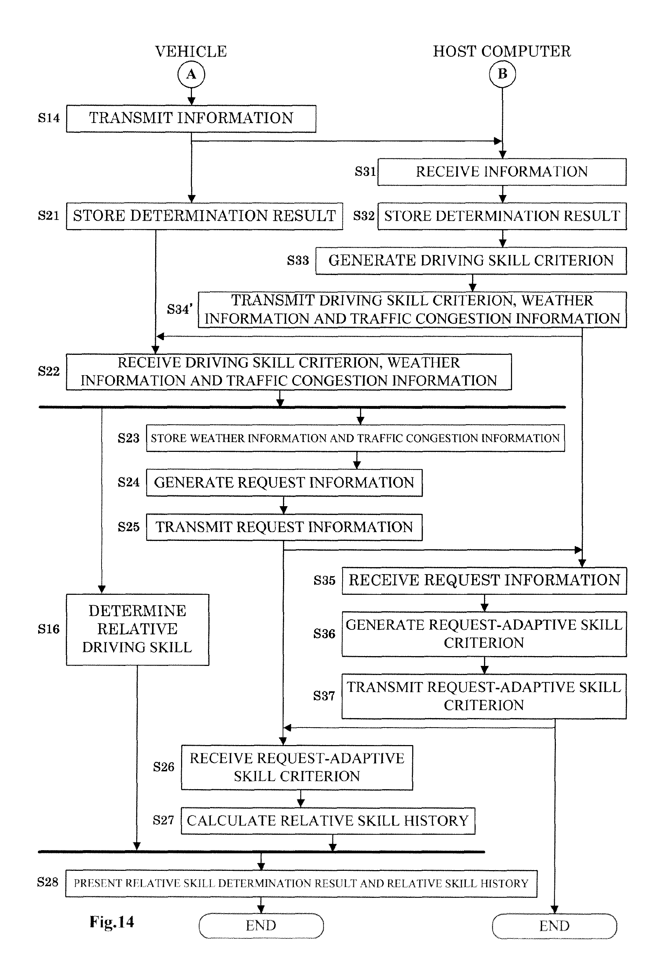

The following describes generation of the skill criterion in Embodiment 2 with reference to Figure 14. Figure 14 is a flow chart illustrating procedures of generating the driving skill criterion in Embodiment 2. Here, since the steps of detecting the vehicle states are the same as those in Embodiment 1, the description thereof is to be omitted.

Similarly to Embodiment 1, upon completion of detecting the vehicle states (A, B), the communication unit 15 of the driving skill determining device 3' transmits the driving skill determination result and the traveling information to the host computer 5 (step S14). Moreover, the own vehicle determination result database 83 stores the driving skill determination result and the traveling information (step S21). The steps (steps S31 to S33) in the host computer 5 from receiving the driving skill determination result and the traveling information of the vehicle 2 to generating a new driving skill criterion are the same as those in Embodiment 1. The newly generated driving skill criterion as well as the weather information and the traffic congestion information corresponding to the driving skill determination result of the vehicle 2 are transmitted to the driving skill determining device 3 of the vehicle 2 via the communication unit 33 (step S34').

The communication unit 15 of the driving skill determining device 3' receives the new driving skill criterion, the weather information and the traffic congestion information from the host computer 5' (step S22). The relative driving skill determining unit 16 determines the relative driving skill similarly to Embodiment 1 (step S16), and the determination result is outputted to the driving skill presentation unit 17'. Simultaneously with the determination of the relative driving skill, the vehicle 2 requires a condition for generating the driving skill criterion to the host computer 5.

The own vehicle determination result database 83 stores the weather information and the traffic congestion information transmitted to the communication unit 15 so as to be associated with the corresponding driving skill determination result and the traveling information (step S23). Moreover, the request information generating unit 82 generates request information as an extraction condition for generating the criterion in response to the period of time received from the input unit 81 (step S24). The request information generating unit 82 transmits the request information to the communication unit 15. The communication unit 15 transmits the request information to the host computer 5' (step S25).

The communication unit 33 of the host computer 5' receives the request information from the vehicle 2 (step S35). The request information that the communication unit 33 receives is inputted to the skill criterion generating unit 35'. The skill criterion generating unit 35' extracts a determination result of the driving skill adaptable to the inputted request information, and generates a request-adaptive skill criterion based on the extracted determination result of the driving skill using the same approach as that in the step S33 (step S36). The generated request-adaptive skill criterion is inputted to the communication unit 33, where the criterion is transmitted to the vehicle 2 (step S37).

The communication unit 15 of the driving skill determining device 3' receives the request-adaptive skill criterion transmitted from the host computer 5' (step S26). The relative driving skill history calculating unit 84 inputs the request-adaptive skill criterion from the communication unit 15, and calculates the past relative driving skill based on the criterion (step S27). The calculated past relative driving skill is outputted to the driving skill presentation unit 17' such as the monitor 69, where the skill is presented to the driver with the relative skill determination result from the relative driving skill determining unit 16.

As noted above, the driving skill determining system of Embodiment 2 allows determination of the past driving skill of the driver with the updated criteria using the traveling data of the group of the drivers actually driving from past to current. Consequently, the driver of the vehicle 2 can grasp the transition of the driving skill from past to current with high accurately. Moreover, the relative level of the previously determined driving skills can be determined among a group of the drivers actually driving from past to current. As a result, the driving skills from past to current are determinable with the updated criteria with high accuracy. This obtains a determination history of the past driving skills with enhanced accuracy.

The present invention is not limited to the foregoing embodiment, but may be modified based on the following description.

1. In the above embodiments, the driving skill determining device 3 of the vehicle 2 transmits and receives the information to and from the host computer 5 via the communication units 15, 33. However, this is not limitative. Instead of transmitting and receiving the information via the radio communication, the information may be transmitted and received using a USB memory or a hard disk. Using the USB memory or the hard disk allows transmitting and receiving a large amount of determination results or pieces of information accumulated during a certain period of time at once.

2. In the above embodiments, the steps S01 to S 17 and the steps S21 to S28 for determining the driving skill of the vehicle 2 by the driving skill determining device 3 are programed to be included in the microprocessor 36. The program may be preinstalled in the microprocessor 36, or may be downloaded from the host computer 5. Alternatively, the program may be installed in the microprocessor 36 from a storage media such as a CD-ROM or a USB with the program stored therein.

Reference Signs List

| | |
|---|---|
| 1 | driving skill determining system |
| 2 | vehicle |
| 2a | two-wheeled motor vehicle |
| 2b | four-wheeled motor vehicle |
| 3, 3' | driving skill determining device |
| 5, 5' | host computer |
| 13 | driving skill determining unit |
| 14 | vehicle information storing unit |
| 16 | relative driving skill determining unit |
| 26 | traveling time detector |
| 27 | traveling position detector |
| 31 | weather information database |
| 32 | traffic congestion information database |
| 34 | determination result database |
| 35, 35 | skill criterion generating unit |
| 74 | GPS |
| 83 | own vehicle determination result database |
| 84 | relative driving skill history calculating unit |

**Claims**

1. A host computer comprising:

    a determination result database configured to store a plurality of driving skill determination results; and
    a skill criterion generating unit configured to generate a criterion for a driving skill based on the driving skill determination results stored in the determination result database.

2. The host computer according to claim 1, wherein the determination result database stores traveling information, containing at least one of traveling position information, traveling time information, and vehicle information of various vehicles, in association with the driving skill determination results, and the skill criterion generating unit generates the criterion for the driving skill corresponding to the traveling information.

3. The host computer according to claim 2, further comprising:

    at least one of a weather information database configured to store weather information and a traffic congestion information database configured to store traffic congestion information, wherein
the traveling information contains at least the traveling position information and the traveling time information,
the determination result database stores at least one of the weather information and the traffic congestion information in association with the traveling information,
the skill criterion generating unit generates the criterion for the driving skill corresponding to at least one of the traveling position information, the traveling time information, the weather information, and the traffic congestion information.

4. The host computer according to claim 3, wherein
the traveling information contains the traveling position information, the traveling time information, and the vehicle information, and
the skill criterion generating unit generates the criterion for the driving skill corresponding to at least one of the traveling position information, the traveling time information, the vehicle information, the weather information, and the traffic congestion information.

5. The host computer according to claim 2, wherein
the skill criterion generating unit generates the criterion for the driving skill corresponding to the specified traveling information.

6. A driving skill determining system comprising:

the host computer according to claim 1; and
a driving skill determining device configured to determine a driving skill of a driver, wherein the driving skill determining device (3) includes a first driving skill determining unit configured to determine the driving skill of the driver from a criterion for the driving skill set in advance; and a second driving skill determining unit configured to determine a relative driving skill of the driver based on the driving skill determination results from the first driving skill determining unit and the criterion for the driving skill generated by the skill criterion generating unit.

7. The driving skill determining system according to claim 6, wherein the driving skill determining device (3) includes at least one of a traveling position detector configured to detect traveling positions of the vehicles, a traveling time detector configured to detect traveling times of the vehicles, and a vehicle information storing unit configured to store information on types of the vehicles, wherein
the determination result database stores the traveling information, containing at least one of the traveling position information, the traveling time information, and the vehicle information of various vehicles, in association with the driving skill determination result, and
the skill criterion generating unit generates the criterion for the driving skill corresponding to the traveling information.

8. The driving skill determining system according to claim 7, wherein
the traveling information contains at least the traveling position information and the traveling time information,
the driving skill determining device includes at least the traveling position detector and the traveling time detector,
the host computer includes at least one of the weather information database configured to store the weather information and the traffic congestion information database configured to store the traffic congestion information,
the determination result database stores at least one of the weather information and the traffic congestion information in association with the traveling information, and
the skill criterion generating unit generates the criterion for the driving skill in association with at least one of the traveling position information, the traveling time information, the weather information, and the traffic congestion information.

9. The driving skill determining system according to claim 8, wherein
the traveling information contains the traveling position information, the traveling time information and the vehicle information,
the driving skill determining device includes the traveling position detector, the traveling time detector, and the vehicle information storing unit, and
the skill criterion generating unit generates the criterion for the driving skill associated with at least one of the traveling position information, the traveling time information, the vehicle information, the weather information, and the traffic congestion information.

10. The driving skill determining system according to claim 7, wherein
the driving skill determining device includes a request information generating unit configured to generate request information with a specified extraction condition for generating the criterion for the driving skill, and a communication unit configured to transmit and receive the information to and from the host computer,
the skill criterion generating unit generates the criterion for the driving skill corresponding to the request information, and
the communication unit transmits the request information to the host computer, and receives the generated criterion for the driving skill.

11. The driving skill determining system according to claim 6, wherein the driving skill determining device comprises:

an own vehicle determination result database configured to store driving skill determination results from the first driving skill determining unit; and

a driving skill history calculating unit configured to calculate the relative driving skill of the driver for a certain period of time based on the driving skill determination results stored in the own vehicle determination result database and the criterion for the driving skill generated by the skill criterion generating unit.

12. The driving skill determining system according to claim 7, wherein the driving skill determining device comprises:

an own vehicle determination result database configured to store driving skill determination results from the first driving skill determining unit in association with the traveling information of an own vehicle;

a request information generating unit configured to generate request information with an extraction condition for generating the criterion for the driving skill being specified from the traveling information stored in the own vehicle determination result database;

a communication unit configured to transmit and receive the information to and from the host computer; and

a driving skill history calculating unit configured to calculate a relative driving skill of the driver for a certain period of time based on the driving skill determination results stored in the own vehicle determination result database and the criterion for the driving skill generated by the skill criterion generating unit, wherein

the skill criterion generating unit generates the criterion for the driving skill corresponding to the request information, and

the communication unit transmits the request information to the host computer, and receives the generated criterion for the driving skill.

13. The driving skill determining system according to claim 12, wherein

the traveling information contains at least the traveling position information and the traveling time information,

the driving skill determining device includes at least the traveling position detector and the traveling time detector,

the host computer comprises at least one of the weather information database configured to store the weather information and the traffic congestion information database configured to store the traffic congestion information,

the determination result database stores at least one of the weather information and the traffic congestion information in association with the traveling information,

the skill criterion generating unit generates the criterion for the driving skill corresponding to at least one of the traveling position information, the traveling time information, the weather information, and the traffic congestion information,

the communication unit receives from the host computer at least one of the weather information and the traffic congestion information,

the own vehicle determination result database stores at least one of the weather information and the traffic congestion information via the communication unit in association with the driving skill determination results from the first driving skill determining unit, and

the request information generating unit generates request information with an extraction condition for generating the criterion for the driving skill being specified from at least one of the position information, the traveling time information, the vehicle information, the weather information, and the traffic congestion information stored in the own vehicle determination result database.

14. A driving skill determining method, comprising:

a first driving skill determining step of determining a driving skill of a driver from a criterion for the driving skill set in advance;

a driving skill criterion generating step of generating a criterion for the driving skill based on a plurality of driving skills determined in the first driving skill determining step; and

a second driving skill determining step of determining a relative driving skill of the driver based on the criterion for the driving skills and the first driving skill.

15. A program for causing a computer to determine a driving skill of a driver, wherein

a driving skill of a driver is determined with a criterion for the driving skill set in advance, the determination results being a first driving skill, and

a second driving skill as a relative driving skill of the driver is determined based on a criterion for the driving skill generated based on a plurality of the first driving skills and the first driving skills.

**Fig.1**

VEHICLE
STATE
DETECTOR — 11

DRIVING SKILL
DETERMINING DEVICE — 3
(VEHICLE SIDE)

21
VEHICLE
ATTITUDE
ANGLE SENSOR

22
STEERING
ANGLE SENSOR

23
WHEEL SPEED
SENSOR

24
HEAD GYRO
SENSOR

12
TRAVELING
STATE
DETECTOR

26
TRAVELING
TIME
DETECTOR

27
TRAVELING
POSITION
DETECTOR

13
DRIVING SKILL
DETERMINING
UNIT

28
TRAVELING
TIME
CLASSIFYING
UNIT

14
VEHICLE
INFORMATION
STORING UNIT

15
COMMUNICATION
UNIT

16
RELATIVE
DRIVING SKILL
DETERMINING
UNIT

17
DRIVING SKILL
PRESENTATION
UNIT

5
HOST COMPUTER

31
WEATHER
INFORMATION
DATABASE

32
TRAFFIC
CONGESTION
INFORMATION
DATABASE

34
DETERMINATION
RESULT
DATABASE

33
COMMUNICATION
UNIT

35
SKILL
CRITERION
GENERATING
UNIT

**Fig.2**

18

|  |  | START POINT OF TIME FRAME | END POINT OF TIME FRAME |
|---|---|---|---|
| TIME FRAME CATEGORY | Tz1 MORNING | ONE HOUR BEFORE SUNRISE TIME | ONE HOUR AFTER SUNRISE TIME |
|  | Tz2 NOON | ONE HOUR AFTER SUNRISE TIME | ONE HOUR BEFORE SUNSET TIME |
|  | Tz3 EVENING | ONE HOUR BEFORE SUNSET TIME | ONE HOUR AFTER SUNSET TIME |
|  | Tz4 NIGHT | ONE HOUR AFTER SUNSET TIME | ONE HOUR BEFORE SUNRISE TIME |

**Fig.3**

|  |  | Am: FOUR-WHEELED MOTOR VEHICLE | Mc: TWO-WHEELED MOTOR VEHICLE |
|---|---|---|---|
| DISPLACEMENT CATEGORY | Dp1 | 660 cc or less | 50 cc or less |
|  | Dp2 | more than 660 cc to 1000 cc or less | more than 50 cc to 125 cc or less |
|  | Dp3 | more than 1000 cc to 1500 cc or less | more than 125 cc to 250 cc or less |
|  | Dp4 | more than 1500 cc to 2000 cc or less | more than 250 cc to 400 cc or less |
|  | Dp5 | more than 2000 cc to 2500 cc or less | more than 400 cc to 600 cc or less |
|  | Dp6 | more than 2500 cc | more than 600 cc |

**Fig.4**

|  |  | Am: FOUR-WHEELED MOTOR VEHICLE | Mc: TWO-WHEELED MOTOR VEHICLE |
|---|---|---|---|
| WEIGHT CATEGORY | Wt1 | 0.5 t or less | 100 kg or less |
|  | Wt2 | more than 0.5 t to 1.0 t or less | more than 100 kg to 150 kg or less |
|  | Wt3 | more than 1.0 t to 1.5 t or less | more than 150 kg to 200 kg or less |
|  | Wt4 | more than 1.5 t to 2.0 t or less | more than 200 kg to 250 kg or less |
|  | Wt5 | more than 2.0 t | more than 250 kg |

**Fig.5**

|  | | | DEFINITION |
|---|---|---|---|
| WEATHER CATEGORY | Wh1 | FINE | CLOUDINESS of eight or less and PRECIPITATION of less than 0.5 mm/h |
| | Wh2 | CLOUDY | CLOUDINESS of nine or more and PRECIPITATION of less than 0.5 mm/h |
| | Wh3 | RAINY | PRECIPITATION of 0.5 mm/h or more |
| | Wh4 | SNOWY | SNOWFALL of 1.0 cm/h or more |
| | Wh5 | FOGGY | VISIBILITY of less than 1 km |

**Fig.6**

EP 2 821 977 A1

| DRIVING SKILL DETERMINATION | TRAVELING INFORMATION | | | | | | | | | | | | WEATHER INFORMA-TION | TRAFFIC CONGESTION INFORMATION |
|---|---|---|---|---|---|---|---|---|---|---|---|---|---|---|
| | TRAVELING POSITION INFORMATION | | | | | | TRAVELING TIME INFORMATION | | | VEHICLE INFORMATION | | | | |
| | LATITUDE | | | LONGITUDE | | | | | | VEHICLE CLASSI-FICATION | DISPLACE-MENT | WEIGHT | | |
| | DEGREE | MINUTE | SECOND | DEGREE | MINUTE | SECOND | DATE | TIME | TIME FRAME | | | | | |
| 7 | N35 | 25 | 30 | E135 | 16 | 20 | 9/24 | 10:50 | Tz2 | Mc | Dp6 | Wg5 | Wh1 | smoothness |
| 5 | N35 | 28 | 41 | E135 | 23 | 16 | 4/25 | 20:59 | Tz4 | Am | Dp2 | Wg1 | Wh1 | smoothness |
| 2 | N35 | 12 | 14 | E135 | 49 | 28 | 5/26 | 17:32 | Tz3 | Am | Dp3 | Wg3 | Wh3 | crowdedness |
| 3 | N35 | 10 | 50 | E135 | 40 | 14 | 11/21 | 13:52 | Tz2 | Am | Dp5 | Wg4 | Wh1 | congestion |
| 4 | N35 | 21 | 44 | E135 | 22 | 6 | 7/5 | 9:21 | Tz2 | Am | Dp1 | Wg1 | Wh1 | crowdedness |
| 5 | N35 | 13 | 16 | E135 | 25 | 2 | 1/5 | 23:44 | Tz4 | Mc | Dp3 | Wg2 | Wh1 | congestion |
| 9 | N35 | 32 | 38 | E135 | 21 | 26 | 6/3 | 12:01 | Tz2 | Am | Dp5 | Wg3 | Wh1 | smoothness |
| 6 | N35 | 11 | 29 | E135 | 41 | 9 | 4/5 | 3:17 | Tz4 | Am | Dp6 | Wg5 | Wh1 | crowdedness |
| 5 | N35 | 34 | 45 | E135 | 14 | 16 | 6/8 | 18:01 | Tz3 | Am | Dp2 | Wg1 | Wh1 | smoothness |
| 3 | N35 | 8 | 9 | E135 | 41 | 11 | 7/9 | 5:21 | Tz1 | Mc | Dp4 | Wg2 | Wh1 | congestion |
| 4 | N35 | 39 | 42 | E135 | 22 | 48 | 10/23 | 22:38 | Tz4 | Am | Dp5 | Wg5 | Wh1 | crowdedness |

**Fig.7**

Fig.8

**Fig.9**

**Fig.10**

VEHICLE                           HOST COMPUTER

A                                 B

S14    TRANSMIT
       INFORMATION

                                  S31    RECEIVE
                                         INFORMATION

                                  S32    STORE
                                         DETERMINATION
                                         RESULT

                                  S33    GENERATE
                                         DRIVING SKILL
                                         CRITERION

                                  S34    TRANSMIT DRIVING
                                         SKILL CRITERION

S15    RECEIVE
       DRIVING SKILL
       CRITERION

S16    DETERMINE
       RELATIVE
       DRIVING SKILL

S17    PRESENT
       DETERMINATION
       RESULT

       END                               END

**Fig.11**

25

| | DETERMINATION RESULT | DEFINITION (SCORE FOR RELATIVE DRIVING SKILL) |
|---|---|---|
| SKILL THE LOWEST ↑ SKILL THE MIDDLE ↓ SKILL THE HIGHEST | 0 | less than -2.25 |
| | 1 | -2.25 or more to less than -1.75 |
| | 2 | -1.75 or more to less than -1.25 |
| | 3 | -1.25 or more to less than -0.75 |
| | 4 | -0.75 or more to less than -0.25 |
| | 5 | -0.25 or more to less than0.25 |
| | 6 | 0.25 or more to less than 0.75 |
| | 7 | 0.75 or more to less than 1.25 |
| | 8 | 1.25 or more to less than 1.75 |
| | 9 | 1.75 or more to less than 2.25 |
| | 10 | more than 2.25 |

**Fig.12**

**Fig.13**

VEHICLE         HOST COMPUTER

(A)         (B)

S14 | TRANSMIT INFORMATION

S31 | RECEIVE INFORMATION

S21 | STORE DETERMINATION RESULT    S32 | STORE DETERMINATION RESULT

S33 | GENERATE DRIVING SKILL CRITERION

S34' | TRANSMIT DRIVING SKILL CRITERION, WEATHER INFORMATION AND TRAFFIC CONGESTION INFORMATION

S22 | RECEIVE DRIVING SKILL CRITERION, WEATHER INFORMATION AND TRAFFIC CONGESTION INFORMATION

S23 | STORE WEATHER INFORMATION AND TRAFFIC CONGESTION INFORMATION

S24 | GENERATE REQUEST INFORMATION

S25 | TRANSMIT REQUEST INFORMATION

S35 | RECEIVE REQUEST INFORMATION

S16 | DETERMINE RELATIVE DRIVING SKILL

S36 | GENERATE REQUEST-ADAPTIVE SKILL CRITERION

S37 | TRANSMIT REQUEST-ADAPTIVE SKILL CRITERION

S26 | RECEIVE REQUEST-ADAPTIVE SKILL CRITERION

S27 | CALCULATE RELATIVE SKILL HISTORY

S28 | PRESENT RELATIVE SKILL DETERMINATION RESULT AND RELATIVE SKILL HISTORY

Fig.14    ( END )        ( END )

# EP 2 821 977 A1

## INTERNATIONAL SEARCH REPORT

International application No.

PCT/JP2013/001179

### A. CLASSIFICATION OF SUBJECT MATTER

*G08G1/00*(2006.01)i, *B60R21/00*(2006.01)i, *B60W40/09*(2012.01)i, *G01C21/26* (2006.01)i, *G08G1/01*(2006.01)i, *G08G1/09*(2006.01)i, *G08G1/13*(2006.01)i

According to International Patent Classification (IPC) or to both national classification and IPC

### B. FIELDS SEARCHED

Minimum documentation searched (classification system followed by classification symbols)
G08G1/00, B60R21/00, B60W40/09, G01C21/26, G08G1/01, G08G1/09, G08G1/13

Documentation searched other than minimum documentation to the extent that such documents are included in the fields searched
Jitsuyo Shinan Koho        1922-1996    Jitsuyo Shinan Toroku Koho    1996-2013
Kokai Jitsuyo Shinan Koho  1971-2013    Toroku Jitsuyo Shinan Koho    1994-2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-203921 A  (Denso IT Laboratory, Inc.), 13 October 2011 (13.10.2011), paragraphs [0026] to [0053]; all drawings (Family: none) | 1-2,5-7, 10-12,14-15 |
| Y | | 3-4,8-9,13 |
| Y | JP 2010-66786 A  (Hitachi, Ltd.), 25 March 2010 (25.03.2010), paragraphs [0026] to [0030]; fig. 1 to 6 (Family: none) | 3-4,8-9,13 |
| A | JP 2007-271959 A  (Mazda Motor Corp.), 18 October 2007 (18.10.2007), entire text; all drawings (Family: none) | 1-15 |

|X| Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 24 April, 2013 (24.04.13) | 14 May, 2013 (14.05.13) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/001179

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-232172 A (Nissan Motor Co., Ltd.), 07 September 2006 (07.09.2006), entire text; all drawings (Family: none) | 1-15 |
| A | JP 2011-96086 A (Toyota Motor Corp.), 12 May 2011 (12.05.2011), entire text; all drawings (Family: none) | 1-15 |
| A | JP 2011-65527 A (Toyota Motor Corp.), 31 March 2011 (31.03.2011), entire text; all drawings & US 2012/0232741 A1  & WO 2011/033840 A1 & DE 112010003678 T  & CN 102549628 A | 1-15 |

Form PCT/ISA/210 (continuation of second sheet) (July 2009)

**INTERNATIONAL SEARCH REPORT**

| International application No. |
|---|
| PCT/JP2013/001179 |

| **Box No. II** | **Observations where certain claims were found unsearchable (Continuation of item 2 of first sheet)** |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| **Box No. III** | **Observations where unity of invention is lacking (Continuation of item 3 of first sheet)** |
|---|---|

This International Searching Authority found multiple inventions in this international application, as follows:
    The invention of claim 1 does not have a technical feature which makes a contribution over the prior art, since the invention is disclosed in JP 2011-203921 A.
    Consequently, the invention of claim 1 and the inventions of claims 2-15 have no technical relationship involving one or more of the same or corresponding special technical features, and therefore cannot be considered to be so linked with each other as to form a single general inventive concept.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 821 977 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011077638 A

- JP 2006232172 A